# EUROPÄISCHE PATENTANMELDUNG

(11) **EP 1 100 251 A2**
(43) Veröffentlichungstag der Anmeldung: **16.05.2001**
(21) Anmeldenummer: 00120351.2
(22) Anmeldetag: 16.09.2000
(51) Int. Cl.: H04M 11/04, G01S 3/00

(54) **Verfahren zum telekommunikationsgestützten Schutz und Auffinden von Lebewesen**

(30) Priorität: 09.11.1999 DE 19953640
(71) Anmelder: Deutsche Telekom AG, 53113 Bonn (DE)
(72) Erfinder: Kneisel, Karl Ernst, 64367 Mühltal (DE); Nguyen, Minh Tri, 64293 Darmstadt (DE)

(57) **Zusammenfassung**

Es wird ein Verfahren für ein telekommunikationsgestütztes logisch-imaginäres Sicherheitsnetz angegeben, das das Auffinden von Objekten, insbesondere Personen und Tieren, ohne Mitwirkung dieser Individuen auch unter sehr schwierigen Bedingungen ermöglicht, indem es immer völlig unabhängig vom Suchgegenstand oder der gesuchten Person initialisiert und automatisch aktiviert wird.

## Beschreibung

Die Erfindung betrifft ein Verfahren zum telekommunikationsgestützten Schutz und Auffinden von Personen und/oder Tieren nach dem Oberbegriff des Patentanspruchs 1.

Es sind grundsätzlich Verfahren bekannt, die zur Positionsbestimmung einer in Not geratenen Person oder zum Auffinden von Tieren den Einsatz der modernen Mini-Sender und Ortungstechnologie mittels GSM/UMTS mit oder ohne GPS benutzen.

Ein Notruf kann durch die in Not geratene Person nach Druck auf eine Ruftaste mit Notruf-Funktion in einem Handy, in einem Armband, einem Schlüsselanhänger, einer Uhr oder einer Halskette aktiviert werden. Dabei ermittelt der Ortungsteil im Gerät sofort die Position der in Gefahr geratenen oder gesuchten Person über GPS oder GSM. Danach erfolgt ein Zugriff über GSM/UMTS auf eine Notrufzentrale, die den Notruf entschlüsselt und sofort an die Rettungsdienste und an die zuständige Einsatzleitzentrale der Polizei oder eines Suchdienstes weiterleitet. Bisher wird diese Lösung mittels GPS in der Verkehrs-Telematik eingesetzt, jedoch noch nicht bei einem personenbezogenen Notruf. Außerdem wird sie auch beim Auffinden von gestohlenen Fahrzeugen mittels GPS Ortung eingesetzt. Ein derartiges Verfahren ist zum Beispiel in "Die Welt" vom 30. September 1994 unter dem Titel "Polizei bekommt Unterstützung aus dem All" von Anatol Johansen ausführlich beschrieben. Hier wird zum Beispiel beschrieben, daß ein an einbruchsicherer Stelle eingebautes Gerät per GPS die Positionsbestimmung aktiviert, wenn versucht wird, das Fahrzeug ohne den richtigen Schlüssel fortzubewegen. Das Gerät setzt dann die Positionsdaten über GSM und über die Notrufzentrale an die Polizei ab. Sollte der Dieb noch zum Wegfahren in der Lage sein, bekommt die Polizei dann laufend die aktuelle Position mitgeteilt und kann die Verfolgung aufnehmen.

Eine andere Realisierungsmöglichkeit sieht die Berechnung der Position in den Vermittlungsstellen oder in dem Zentralrechner einer Notrufzentrale vor. Das Gerät sendet im Notfall nur den Notruf an die Notrufzentrale, die dann die Position der in Not befindlichen Person ermittelt und Polizei bzw. Rettungsdienste alarmiert.

GPS ist für die Außenpositionsbestimmung sehr gut geeignet. Die erforderliche direkte Sicht zu den Satelliten begrenzt jedoch die Einsatzbereiche dieses Systems. Nach dem seit Juni 1997 die künstliche Verringerung der Positionsgenauigkeit für zivile Nutzer per SA (selektive Availability ) auf Drängen der FAA (Amerikas Zivilluftfahrt-Behörde) abgeschaltet wurde, sind bei GPS Positionsfehler zwischen 20 und 60 Meter üblich. Vor diesem Datum mußten zivile Nutzer mit 100 bis 300 Meter Abweichung von der exakten Position rechnen. Für eine 3D-Positionsberechnung wird eine direkte Sicht zu vier Satelliten benötigt. Die Qualität der jeweiligen Position bestimmt in erster Linie der räumliche Abstand zwischen den zur Berechnung benutzten Satelliten. So sind mit GPS im offenen Gelände Fehler bis ca. 20 Meter üblich. In engen Straßenschluchten moderner Metropolen, sofern hier Empfang von mindestens drei Satelliten möglich ist, muß mit ca. 60 Meter Abweichung gerechnet werden. Verbesserungen werden durch zusätzliche Weg- und Richtungs- bzw.

Richtungsänderungs-Sensoren erreicht. Einbeziehung der Bewegungsdynamik des Empfängers zur Beurteilung der aktuellen bzw. Prognose der nächsten Positionsdaten ermöglicht eine bessere Kontinuität. Moderne Technologie und Rechnerleistung ermöglichen heute auch ohne zusätzliche Weg- und Richtungssensoren Genauigkeiten, die bisher nur mit Differential-GPS (DGPS) möglich waren. Standard sind bei DGPS zur Zeit weniger als zwei bis drei Meter Abweichung im offenen Gelände und ca. 15 Meter in engen Innenstädten. Für diese Verbesserungen werden bis zu 10 Positionsrechnungen je Sekunde durchgeführt, aber nur ein Wert pro Sekunde abgegeben. GPS ist eine genaue, preiswerte und sofort verfügbare Möglichkeit der Positionsbestimmung. Wegen der begrenzten Funktionalität (direkte Sichtverbindung zwischen Empfangsantenne und mindestens drei bis vier Satelliten) ist für den Notfalleinsatz das Speichern der letzten gültigen Positionsdaten, inklusive Datum und Zeit der Erfassung, erforderlich. GSM als Ortungsbasis ist wegen der schwierigen Innenraummöglichkeiten, trotz zu erwartender größerer Abweichung vorteilhaft, jedoch noch nicht verfügbar. Eine sinnvolle Kombination mehrerer Systeme, GPS zur Groblokalisierung von gesuchten Personen eingeschlossen, ist erstrebenswert. Peilverfahren könnten dann im Nahbereich zur Fein-Lokalisierung weiterhelfen.

Wie bereits dargestellt, haben die bisher bekanntgewordenen Verfahren alle den Nachteil, daß sie von der in Not geratenen Person bzw. von dem gestohlenen Fahrzeug aus initialisiert werden. Dies ist insbesondere dann von sehr großem Nachteil, wenn Personen verschüttet sind und nicht in der Lage sind, die Notrufsender zu aktivieren oder wenn kleine Kinder bzw. auch kranke Personen einen derartigen Notrufsender nicht aktivieren können/dürfen.

Der Erfindung liegt deshalb die Aufgabe zugrunde, ein Verfahren zum telekommunikationsgestützten Schutz und Auffinden von Personen und Tieren zu schaffen, das unabhängig von der zu suchenden Person oder von dem zu suchenden Tier arbeitet und zu jeder Zeit von einer Suchoder Notrufzentrale sofort initialisiert werden kann und die Ortung dann automatisch durchführt.

Die Lösung der Erfindung ist im Kennzeichen des Patentanspruchs 1 charakterisiert.

Weitere Lösungen bzw. Ausgestaltungen der Erfindung sind in den Kennzeichen der Patentansprüche 2 bis 10 charakterisiert.

Der Vorteil des erfindungsgemäßen Verfahrens nach den Patentansprüchen besteht vor allem darin, daß eine gesuchte Person, zum Beispiel ein Kind, ein portables Notrufgerät mit Sender/Empfänger bei sich trägt, das zum Beispiel in Form einer Uhr, eines Schlüsselanhängers oder im Schuh realisiert ist, das sich im Warte- oder Ruhezustand befindet und von dem Kind nicht aktiviert werden kann. Bei Alarmauslösung, zum Beispiel durch Eltern, Aufsichtspersonen, durch eine Notrufzentrale nach Zeitrestriktion wird die Suchphase eingeleitet. Dabei sendet die Notrufzentrale ein Suchsignal mit einem Individualcode aus, gegebenenfalls gleichzeitig über verschiedene Netze, bei Rückmeldung wird der Sender des am Körper getragenen Notrufgerätes bei dem gesuchten Objekt, insbesondere bei der gesuchten Person oder bei dem gesuchten Tier, aktiviert. Es erfolgt nun eine grobe Lokalisierungsphase, indem mittels GSM/UMTS oder GPS die jeweilige Person bzw. das Tier geortet wird. Danach werden sofort Hilfsmaßnahmen wie zum Beispiel Weiterleitung der Meldung "Kind in Not" an die Polizei und an die Rettungsdienste eingeleitet. Die Feinortung vor Ort erfolgt dann in bekannter Weise, wie zum Beispiel beim Lawinensuchgerät durch Bewegen eines kennungsselektiven Kontrollempfängers und Verändern der Empfängerempfindlichkeit.

Das Gerät ist sehr klein, hat ein geringes Gewicht und gewährleistet, daß es unauffällig zu tragen ist, das in gewöhnlichen Gegenständen wie Schuhen, Armbändern integrierbar ist und damit bei kritischen Bedrohungssituationen unentdeckt bleibt.

Zum Beispiel werden Kinder bei physischen Bedrohungen und körperlichen Angriffen, wie zum Beispiel bei Entführungsund Mißbrauchs- bzw. Unfällen oder beim Ver- und Weglaufen als besonders gefährdet eingestuft. Ein anderes Anwendungsbeispiel besteht zum Beispiel im Auffinden von verirrten Personen, wie zum Beispiel älteren Menschen, die körperlich noch fit sind, aber einen temporären oder permanenten Zustand geistiger Verwirrung unterliegen.

Eine weitere Anwendung ist in der gezielt ausgelösten Tiersuche gegeben, indem mit Hilfe einer Notrufzentrale analog zur Personensuche die Position des Tieres per GSM oder GPS ermittelt wird und ein Tier-Wach- und Suchdienst, der auch Spezialisten zur Beruhigung von Tieren und zum gefahrlosen Wiedereinfangen bzw. zur Befreiung eines Tieres aus Zwangssituationen umfaßt, automatisch aus der näheren Umgebung alarmiert wird.

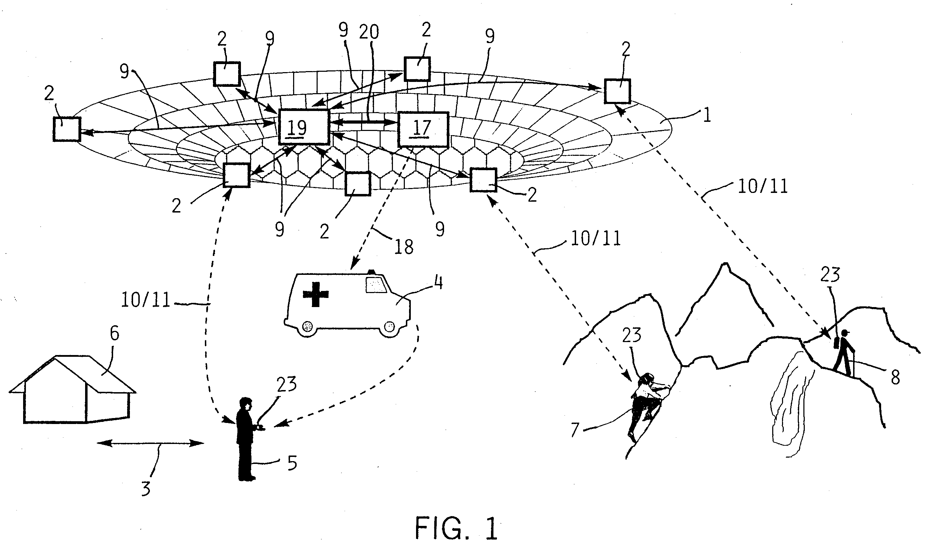

Eine weitere Anwendung besteht noch darin, besonders gefährdete Personen aus Politik und Wirtschaft mit solch einem Minigerät auszurüsten, das dann im Entführungsfall von der Polizei bzw. einer Zentrale aus initialisiert werden kann. Da ein derartiges Gerät unauffällig getragen werden kann, stellt diese Möglichkeit einen besonderen sicheren Personenschutz dar. Ein anderer Anwenderkreis sind die Sportler, die als Kletterer und Wanderer in Fig. 1 dargestellt sind.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

Die Erfindung wird im folgenden anhand von in der Zeichnung dargestellten Ausführungsbeispielen näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeuten:
- Fig. 1: ein prinzipielles logisch-imaginäres Sicherheitsnetz auf Telekommunikationsbasis zur Durchführung des Verfahrens;
- Fig. 2: eine prinzipielle Darstellung einer Suchphase und
- Fig. 3: eine prinzipielle Darstellung einer Meß- und Lokalisierungsphase.

In Fig. 1 ist ein logisch-imaginäres Sicherheitsnetz 1 auf Telekommunikationsbasis dargestellt. Diese Darstellung dient zur prinzipiellen Erklärung des erfindungsgemäßen Verfahrens. Das logisch-imaginäre Sicherheitsnetz 1 besteht aus Basis-Stationen 2. Auf der linken Seite ist eine Person 5 dargestellt, die besonders gesundheitsgefährdet ist. Dies könnte zum Beispiel ein Bewohner eines Heimes 6 für Senioren oder auch für Geistesbehinderte sein. Dadurch, daß die Person 5 mit einem oder mehreren Sensor(en) ausgerüstet ist, wird der Mobilitätsbereich 3 von derartigen Personen wesentlich erhöht und zwar mit einem wesentlich verminderten Risiko, weil sie jetzt überall unabhängig von ihrem eigenen Zutun im gegebenen Fall sicher und schnell geortet und gefunden werden können. Ein Not- und/oder Rettungsdienst 4, der mit dem logisch-imaginären Sicherheitsnetz 1 in Verbindung steht, kann dann sofort die erforderlichen Schritte zur Rettung der Person aufnehmen. Durch eine automatische Verbindung des Not- und/oder Rettungsdienstes 4 über die Suchzentrale 17 und das Telemetriezentrum 19 mit den Basis-Stationen 2 kann die automatische Aktivierung eines Suchrufs und Rückrufs 9 bzw. eines Notrufs 18 eingeleitet werden. Der Sender des Notrufgerätes 23, das von der jeweilig gefährdeten Person 5 getragen wird, wird durch Initialisieren 10 aktiviert. Die mit zwei Pfeilen versehene gestrichelte Linie 10/11 stellt die bedarfsweise Führung durch das System, das heißt zum Beispiel das Ein-/Ausklinken, dar.

In der Mitte von Fig. 1 ist ein Kletterer 7 mit Notrufgerät 23 (Sender/Empfänger) dargestellt, der ebenfalls über eine entsprechende Funkverbindung und zum Initialisieren 10 der Aktivierung des Senders mit dem logisch-imaginären Sicherheitsnetz 1 auf Telekommunikationsbasis und für die automatische Aktivierung des Notrufs 18 verbunden ist.

Auf der rechten Seite ist noch ein Wanderer 8 mit Notrufgerät 23 dargestellt, der ebenfalls mit dem logisch-imaginären Sicherheitsnetz 1 auf Telekommunikationsbasis zum Initialisieren 10 der Aktivierung des Notrufgerätes 23 in Verbindung steht und zum automatischen Aktivieren des Notrufs 18.

Anstelle Kletterer könnten natürlich auch Radfahrer, Sportler, Wildwasserkanufahrer, Ballonfahrer oder Paragleiter-Flieger mit einem derartigen Notrufgerät ausgerüstet werden und mit dem erfindungsgemäßen Verfahren dadurch im Notfall voll automatisch lokalisierbar gemacht werden.

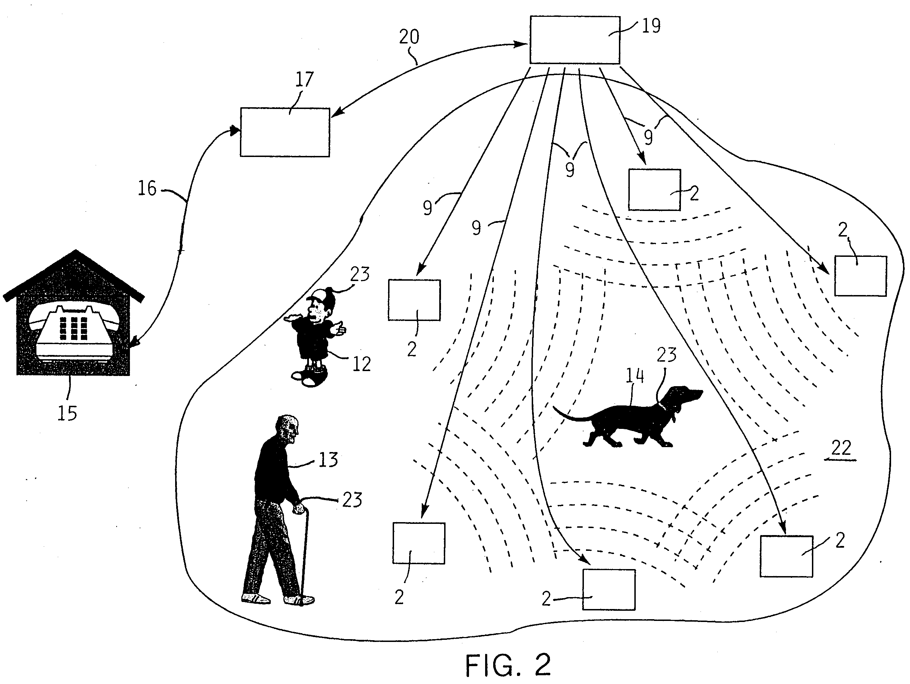

In Fig. 2 ist nun ein Beispiel einer Suchphase dargestellt, wobei dieses Beispiel ein Kind 12, eine gefährdete Person 13 und einen Hund 14 mit Notrufgerät 23 zeigt, die hier als Beispiele für Suchobjekte dargestellt sind. Es wird zum Beispiel angenommen, daß im vorliegenden Beispiel eine Familie aus einem Haus 15 heraus einen Suchruf 16 absetzt, der an eine Suchzentrale 17 gelangt. Die Suchzentrale 17 kann mit einer automatischen Spracherkennung ausgerüstet sein bzw. digital entsprechend codiert sein. Die Suchzentrale 17 ist ihrerseits mit einem Telemetriezentrum 19 in Verbindung und zwar über die Verbindungen 20 zum automatischen Aktivieren des Such- und Rückrufs. Vom Telemetriezentrum 19 gelangt an die Basis-Stationen 2 die Suchaktion in Form der Aktivierung eines netzweiten Suchrufes 9. Die Basis-Stationen 2 bauen daraufhin zur Aktivierung des Senders des jeweiligen am Körper getragenen Notrufgerätes 23 ein elektro-magnetisches Feld 22 auf, in dessen Mitte das gesuchte Kind 12, die gesuchte gefährdete Person 13 oder der gesuchte Hund 14 ist wie im vorliegenden Beispiel dargestellt. Die Aktivierung des Senders des am Körper getragenen Notrufgerätes 23 geschieht mit einem mitgesendeten Individualcode, gegebenenfalls gleichzeitig über verschiedene Netze. Nachdem der Empfänger des sich im Ruhe- oder Wartebetrieb befindenden Notrufgerätes 23 den für ihn spezifischen Individualcode identifiziert hat, aktiviert er den Sender des Notrufgerätes 23. Der Sender sendet nun ein Signal, zum Beispiel im 450 MHz-Bereich aus und zwar in Form von periodischen Impulsen mit Spezialcode.

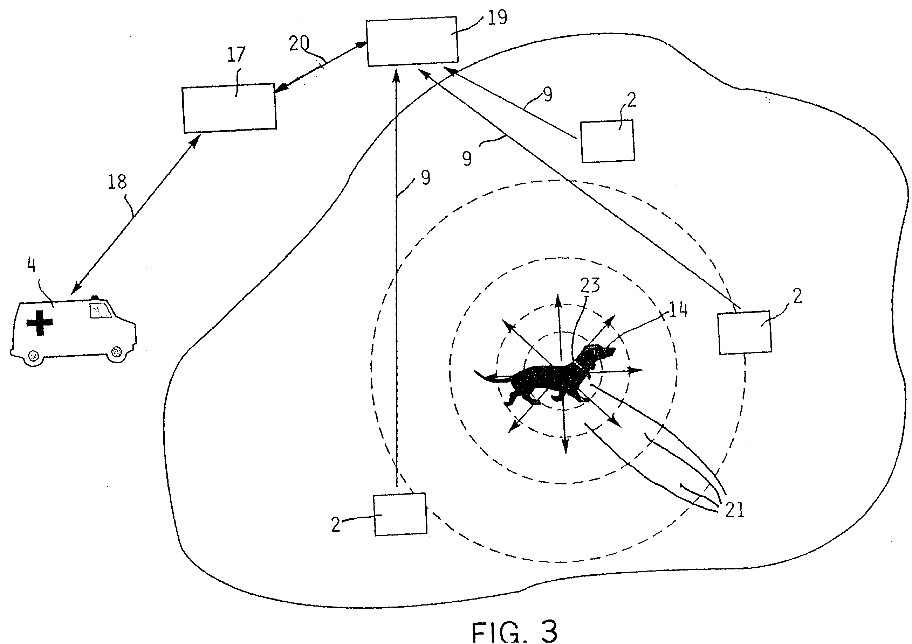

Danach folgt die Meß- und Lokalisierungsphase entsprechend der Fig. 3.

Die Suchzentrale 17 gibt jetzt über eine Verbindung 16 die Bestätigung für die Einleitung der Meß- und Lokalisierungsphase an die Famile aus dem Haus 15.

Die Verfahrensschritte der Meß- und Lokalisierungsphase sind nun wie folgt: Die automatische Rückmeldung 11 erfolgt über die Basis-Stationen 2 und über das Telemetriezentrum 19 zur Suchzentrale 17.

Es folgt die Signaldiskriminierung der mitwirkenden Basis-Stationen 2, Auswertungen der Signalamplitude, Phase oder Impulsverbreiterung/Verschiebung durch Telemetriezentrum 19.

Aus der Signalanalyse erfolgt die Grob-Lokalisierung des gesuchten Lebewesens und die Aktivierung eines Rettungsoder Tier-, Wach- und Suchdienstes 4.

Danach erfolgt die Fein-Lokalisierung durch die Peilung vor Ort mit Handpeilgeräten, zum Beispiel durch Messung maximaler Feldstärke, wie durch die Pfeile 21 dargestellt ist.

Wie aus der vorstehenden Beschreibung hervorgeht, besteht ein entscheidendes Merkmal der Lösung zum sicheren Suchen und Finden von Personen oder Tieren in der Kombination und Koordinierung der Grob- und Feinlokalisierung, die so erfolgen muß, daß die gesuchten Personen oder Tiere nach Aussenden des Suchsignals durch Dritter ohne ihr Zutun praktisch automatisch gefunden werden. Es ist also hier ein Verfahren beschrieben, das zu einer neuen Problemlösung zum sicheren automatischen Suchen und Finden von Kindern und von örtlich und zeitlich desorientierten sowie verschleppten Personen und entlaufener Tiere bestens geeignet ist.

### Liste der Bezugszeichen

1 logisch-imaginäres Sicherheitsnetz auf Telekommunikationsbasis
2 Basis-Station
3 Mobilitätsbereich
4 Not- und Rettungsdienst / Tier-, Wach- und Suchdienst
5 gefährdete Person mit Notrufgerät
6 Heim
7 Kletterer mit Notrufgerät
8 Wanderer mit Notrufgerät
9 automatische Aktivierung eines Such- und Rückrufs
10 Initialisieren des Senders des Notrufgerätes
11 automatische Rückmeldung
12 Kind mit Notrufgerät
13 gefährdete Person mit Notrufgerät
14 Hund mit Notrufgerät
15 Heim (Familie)
16 Suchruf
17 Suchzentrale/Notrufzentrale
18 automatische Aktivierung eines Notrufs
19 Telemetriezentrum
20 Verbindungen zwischen Suchzentrale und Telemetriezentrum
21 elektro-magnetisches Feld vom Sender des Notrufgerätes
22 elektro-magnetisches Feld der Basis-Stationen
23 Notrufgerät (Sender/Empfänger)

## Patentansprüche

1. Verfahren zum telekommunikationsgestützten Suchen und Auffinden von Objekten oder bestimmten Personen, wie zum Beispiel Kinder, gefährdete Personen, kranke Personen, verschüttete Personen, Sportler und entlaufene Tiere mit Hilfe von Suchrufen, dadurch gekennzeichnet,
daß die Suchrufe (16) über eine Suchzentrale (17) an ein Telemetriezentrum (19) über Verbindungen zur automatischen Aktivierung eines Such- und Rückrufs (9) gegeben werden,
daß das Telemetriezentrum (19) mit Basis-Stationen (2) in Verbindung mit der Suchzentrale (17) steht, die in ihrer Kombination ein logisch-imaginäres Sicherheitsnetz auf Telekommunikationsbasis (1) bilden und in einer Suchphase bei Rückmeldung eines ausgesendeten Individualcodes eine Rückmeldung eines Signals von einem Notrufgerät (23) mit Sender am gesuchten Subjekt oder Objekt (5, 7, 8, 12, 13, 14) auslösen und damit eine automatische Berechnung und Bestimmung des Standortes initialisieren und
daß danach eine Feinpeilung vor Ort mit bekannten Handpeilgeräten und maximaler Feldstärke erfolgt.

2. Verfahren nach Patentanspruch 1, dadurch gekennzeichnet,
daß ein netzweiter Suchruf (16) zur Aktivierung des Senders des am Körper getragenen Notrufgerätes 23 mit Individualcode über ein Funknetz (GSM/UMTS) bzw. gleichzeitig über verschiedene Funknetze erfolgt.

3. Verfahren nach Patentanspruch 1 oder 2, dadurch gekennzeichnet,
daß die Suchrufsignale periodisch mit einem spezifischen Individualcode ausgesendet werden.

4. Verfahren nach einem der Patentansprüche 1 bis 3,
dadurch gekennzeichnet,
daß eine Signaldiskriminierung der mitwirkenden Basis-Stationen (2) durch Auswertungen der Signalamplitude, der Phase oder Impulsverbreiterung/Verschiebung im Telemetriezentrum (19) und nach Richtung bzw. Entfernung erfolgt.

5. Verfahren nach einem der Patentansprüche 1 bis 4,
dadurch gekennzeichnet,
daß der Suchruf nach Absetzen eines Suchrufes (16) von Dritten in einem Heim (15) für Personen wie ein Kind (12) oder eine gefährdete bzw. ältere Person (13) an eine Suchzentrale (17) mit automatischer Spracherkennung erfolgt.

6. Verfahren nach einem der Patentansprüche 1 bis 4,
dadurch gekennzeichnet,
daß das Notrufgerät (23) von gesuchten Objekten getragen wird, sich im Warte- oder Ruhezustand befindet und von den gesuchten Objekten nicht aktiviert ist.

7. Verfahren nach einem der Patentansprüche 1 bis 6,
dadurch gekennzeichnet,
daß das am Körper getragene Notrufgerät (23) mit einem kombinierten Empfänger und Sender ausgerüstet ist, das beim Empfang eines Suchrufes mit zutreffender Individualcodierung automatisch auf Senden mit aktivierten Rückruf zum Bestätigen eines Treffers umschaltet.

8. Verfahren nach einem der Patentansprüche 1 bis 7,
dadurch gekennzeichnet,
daß bei positivem Ergebnis die automatische Aktivierung eines Notrufs (18) erfolgt, der einen entsprechenden Rettungs-/Not- oder Wachdienst (4) aktiviert.

9. Verfahren nach einem der Patentansprüche 1 bis 8,
dadurch gekennzeichnet,
daß das Aussenden von Impulsen mit speziellem Code am Notrufgerät 23 periodisch erfolgt.

10. Verfahren nach einem der Patentansprüche 1 bis 9,
dadurch gekennzeichnet,
daß bei positivem Ergebnis vom Telemetriezentrum (19) automatisch das Rückrufsignal mit Spezialcode zur Suchzentrale (17) und von da gegebenenfalls zum suchenden Heim (6, 15) automatisch gesendet wird.
